# EUROPEAN PATENT SPECIFICATION

(11) **EP 3 786 726 B1**
(45) Date of publication and mention of the grant of the patent: **11.10.2023**
(21) Application number: 19194836.3
(22) Date of filing: 02.09.2019
(51) Int. Cl.: G04B 31/06, G04B 31/004, F16C 17/08, F16C 33/04, B33Y 70/10

(54) **ANTIFRICTION SHELL FOR PIVOTING ELEMENTS OF A MECHANICAL TIMEPIECE MOVEMENT**
REIBUNGSVERHINDERNDE HÜLLE FÜR SCHWENKBARE ELEMENTE EINES MECHANISCHEN UHRWERKS
COQUE ANTIFRICTION POUR ÉLÉMENTS PIVOTANTS D'UN MOUVEMENT D'HORLOGERIE MÉCANIQUE

(43) Date of publication of application: 03.03.2021
(73) Proprietor: Valsigna GmbH, 6962 Lugano (CH)
(72) Inventor: Kancerevycius, Gitanas, 6946 Ponte Capriasca (CH); Capiaghi, Gian Paolo, 6855 Stabio (CH); Janusauskas, Linas, 06277 Vilnius (LT); Gailevicius, Darius, 10105 Vilnius (LT)
(74) Representative: Postiglione, Ferruccio

(56) References cited:
- EP-A1- 2 605 086
- CH-A2- 708 936
- US-A- 3 164 421
- SENIUTINAS G ET AL: "Beyond 100?nm resolution in 3D laser lithography - Post processing solutions", MICROELECTRONIC ENGINEERING, ELSEVIER PUBLISHERS BV., AMSTERDAM, NL, vol. 191, 2 February 2018 (2018-02-02), pages 25-31, XP085355371, ISSN: 0167-9317, DOI: 10.1016/J.MEE.2018.01.018
- ALEKSANDR OVSIANIKOV ET AL: "Ultra-Low Shrinkage Hybrid Photosensitive Material for Two-Photon Polymerization Microfabrication", ACS NANO, vol. 2, no. 11, 25 November 2008 (2008-11-25), pages 2257-2262, XP055182536, ISSN: 1936-0851, DOI: 10.1021/nn800451w
- QUAN SUN ET AL: "Femtosecond laser photopolymerization of photonic and free-movable microstructures in sol-gel hybrid resist", SPIE - INTERNATIONAL SOCIETY FOR OPTICAL ENGINEERING. PROCEEDINGS, vol. 7591, 11 February 2010 (2010-02-11), page 75910K, XP055671591, US ISSN: 0277-786X, DOI: 10.1117/12.840657
- MANGIRDAS MALINAUSKAS ET AL: "Ultrafast laser processing of materials: from science to industry", LIGHT: SCIENCE & APPLICATIONS, vol. 5, no. 8, 14 March 2016 (2016-03-14), pages 1-14, XP055530724, DOI: 10.1038/lsa.2016.133
- MARIA FARSARI ET AL: "REVIEW ARTICLE;Multiphoton polymerization of hybrid materials;Multiphoton polymerization of hybrid materials", JOURNAL OF OPTICS, INSTITUTE OF PHYSICS PUBLISHING, BRISTOL GB, vol. 12, no. 12, 11 November 2010 (2010-11-11), page 124001, XP020202235, ISSN: 2040-8986, DOI: 10.1088/2040-8978/12/12/124001

## Description

### Field of the invention

The present invention relates to the fields of horology, with regard to the rotating parts of the timepiece movements. In particular, the present invention relates to an antifriction shell for pivoting elements of a mechanical timepiece movement.

In a further aspect, the present invention relates to a low friction pivoting element of a mechanical timepiece movement provided with an antifriction shell coupled to its pivoting ends, and to a method of producing the same.

Finally, the present invention mechanical timepiece movement comprising a low friction pivoting element.

### Background art

A mechanical timepiece movement contains all moving parts of a mechanical watch, such as the power source, the train wheel, the escapement and the oscillator. These moving parts are subject to continuous forces and stresses, wherein metal on metal friction is significant and may results in energy losses and wear of the mechanical timepiece movement.

The moving parts of the mechanical timepiece movement comprise pivoting elements which transmit the motion in the mechanical timepiece movement and are provided with ends acting as shafts allowing the rotation around an own axis. When manufacturing pivoting elements for train wheels, escapements and oscillators, tolerances are generally around 5 microns. Therefore, in consideration also of the number of rotations of each pivoting part during its life cycle, reducing the friction is necessary to ensure top performance for a mechanical timepiece movement of a good quality.

Solutions in prior art seek to minimize the friction of the pivoting elements and, in particular, the friction of the ends of each pivoting element by setting such pivoting elements in bearing jewels instead of having metal which rubs metal. Contemporary watches utilize such jewels in a variety of areas, including as pivot bearings for wheels, automatic winding components, and calendar mechanism as well as pallet stones. Typically, a number of jewels between 17 and 30, or even more, in a single mechanical timepiece element are used.

The gear train wheels are the means of transmitting power from the mainspring to the escapement. In order to make that process as efficient and friction free as possible, jewels are used as bearings for the pivots of those wheels. Steel or brass bearings would cause excessive friction, thus consuming unnecessary power from the mainspring. The use of jewels in combination with the highly polished steel of the pivots drastically reduces that friction.

The same is true for the escapement lever's pallet stones, which work against the highly polished steel surface of the escape wheel teeth and reduce the friction experienced there.

A jewel bearing is a plain bearing used where low friction, long life, and dimensional accuracy are important, in which the metal end of a pivoting element turns in a jewel-lined pivot hole. The hole is typically shaped like a torus and is slightly larger than the shaft diameter. The jewel bearing material is usually synthetic sapphire or ruby (corundum), which is grown in a controlled environment and must then be milled, sawed, and polished into the desired shapes.

Balance pivots use jeweled bearings, though their setup is slightly different: they utilize a standard-style train wheel jewel bearing except that it has metal seating around it. That metal seating holds another jewel in place that is positioned on top of the balance pivot, keeping the lubrication for the jewel in place but also greatly reducing friction.

Watches of a higher quality, such as those receiving C.O.S.C certification (*Contrôle Officiel Suisse des Chronomètres*), or higher, are manufactured to a higher level of precision. One area this particular aspect stands out is the spring barrel.

Traditionally, barrels would have brass bushings as bearings for their arbors on the main plate and barrel bridge. However, a watch manufactured to a higher tolerance would swap those out for jeweled bearings.

Ruby jewels are also used for the roller jewel. The roller is positioned on the underside of the balance wheel and has an impulse jewel, which swings back and forth in an arc, engaging with the pallet to allow the release of energy. The jewel for the roller is combined with highly polished steel of the pallet fork to again reduce as much friction as possible so the watch will run at peak performance.

The automatic rotor also is an area where friction consumes power, which causes the watch to not wind as efficiently as possible. In some movements, ball bearings are used to increase the winding efficiency, but in calibers that use an axle, jewels are employed.

The axle is generally seated against two jewels that are fitted into the upper and lower bridges of the automatic work.

Jewels can also be used in countless other areas of more complicated watches such as chronographs, minute repeaters, and countdown timers. Moreover, jewels may be used instead of the friction lubricants in order to reduce their consumption.

A further problem common to known mechanical timepiece movements which make use of jewel bearings resides in the wear of the pivoting ends. In particular, pivoting elements may be coated, for example by diamond-like carbon coating (DLC coating), but these coatings wear with time and before their end-of-life when rotating in contact with a jewel bearing. Therefore, even replacing the worn jewel bearing with a new one, the coatings wear will be maintained losing the desired effect on the pivoting element and, consequently, lowering the quality of the mechanical timepiece movement.

Finally, fitting the metal pivoting end of a pivoting element into a jewel bearing, or replacing a rubbed-in jewel with a new one, requires great care and time must be taken to burnish the new setting.

It would therefore be desirable to have a low friction pivoting element, and a related mechanical timepiece movement, capable of minimizing the drawbacks described above. In particular, it would be desirable to have an antifriction shell for pivoting elements of a mechanical timepiece movement capable of allowing a reduced friction during rotation and, at the same time, capable of achieving a significant cost saving in production and assembly operations. In this regard, it would be desirable to have an antifriction shell for pivoting elements of a mechanical timepiece movement capable of providing a bearing integral with the pivoting end of a pivoting element which would allow a faster assembly operation and, at the same time, maintaining a reduced friction feature.

Furthermore, it would be desirable to have a method of producing a low friction pivoting element of a mechanical timepiece movement capable of ensuring a high-quality low-friction pivoting element at a reduced cost.

The documents EP2605086A1 and CH708936A2 present some examples of antifriction shells for pivoting elements of a mechanical timepiece movement.

### Summary of the Invention

An object of the present invention is to provide an antifriction shell for pivoting element of a mechanical timepiece movement capable of minimizing the aforesaid problems.

Another object of the present invention is to provide a pivoting element of a mechanical timepiece movement capable of reducing friction during movement, in particular during rotation around an own axis defined by a pivoting end.

Furthermore, an object of the present invention is to provide a mechanical timepiece movement provided with at least one low friction pivoting element.

Finally, an object of the present invention is to provide a method of producing a low friction pivoting element of a mechanical timepiece movement capable of ensuring a high-quality low-friction pivoting element at a reduced cost.

The aforesaid objects are achieved by an antifriction shell for pivoting elements of a mechanical timepiece movement according to the attached claims.

The antifriction shell is characterized in that it is made of a silicon-ceramic based SZ2080 acrylate photopolymer material,
wherein the antifriction shell has an elongated body defined along an axis of symmetry and provided with a head end and a bottom end opposite to each other, and
wherein the elongated body comprises a blind central hole defined along the axis of symmetry at the head end.

In this way, it is possible to define a bearing able to fit a pivoting end of a pivoting element. Therefore, the antifriction shell allows to effectively cover the pivoting end, to carry out an effective friction reduction during movement. Moreover, the silicon-ceramic based SZ2080 acrylate photopolymer material allows to define a final structure with high hardness in the Mohs scale, thus reducing friction and wear so to prolong service time of the mechanical timepiece movement.

Preferably, the bottom end is tapered or rounded or chamfered.

These solutions are particularly suitable for obtaining a smooth contact between the bottom end of the pivoting element and a further jewel bearing.

Preferably, the blind central hole has a tapered end or a rounded end or a chamfered end or a flat end.

Furthermore, this solution is particularly suitable for allowing an easy insertion of the pivoting end in the antifriction shell.

Preferably, the elongated body comprises one or more through hole transverse to, and in communication with, the blind central hole.

The through hole thus allow the expulsion of air during the fitting of the pivoting end in the antifriction shell, minimizing the effort during assembly.

Preferably, the elongated body has a spherical shape. Alternatively, the elongated body has a cylindrical shape. Alternatively, the elongated body has a conical shape, wherein the major base corresponds to the head end and the vertex corresponds to the bottom end. Alternatively, the elongated body has a truncated cone shape, wherein the major base corresponds to the head end and the minor base corresponds to the bottom end.

These shapes are particularly suitable for obtaining a smooth contact between the lateral wall, or lateral walls, of the pivoting element and a further jewel bearing.

Z According to the invention, the antifriction shell is obtained by a process comprising the following phases:
- producing an intermediate crystalline structure of the elongated body by irradiating with a femtosecond laser a silicon-ceramic based SZ2080 acrylate sol-gel, wherein the intermediate crystalline structure has the same shape and dimension greater than the final structure of the elongated body;
- heat-treating the intermediate crystalline structure to obtain the final structure of the elongated body by defining a ceramic phase with the silica and zirconia precursors present in the silicon-ceramic based SZ2080 acrylate sol-gel, wherein the phase of heat-treating reduces the dimension of the intermediate crystalline structure to a dimension appropriate to the final structure without distortions of the shape.

More preferably, the phase of producing an intermediate crystalline structure comprises the following step:
- irradiating the silicon-ceramic based SZ2080 acrylate sol-gel with a femtosecond laser of a pulsed type for a duration comprised in a range between 10 femtoseconds and 1000 femtoseconds, preferably between 100 femtoseconds and 300 femtoseconds, with a wavelength in a range between 400 nm and 2000 nm, preferably around 515 nm or 800 nm, and at a frequency in a range between 1 KHz and 100 Mhz, preferably around 1 Mhz; and
the phase of heat-treating comprises the following steps:
- heating the intermediate crystalline structure up to a working temperature in a range comprised between 1100°C and 1300°C, preferably at a working temperature around 1200°C;
- maintain the working temperature for a working time in a range comprised between 20 minutes and 40 minutes, preferably for a working time around 30 minutes.

The laser irradiation phase first and the heat-treating phase then allow to obtain a final structure which corresponds in shape with the pivoting end to be covered and with a high hardness in the Mohs scale, similar to the jewel bearing to be contacted.

The aforesaid objects are also achieved by a pivoting element of a mechanical timepiece movement provided with at least one pivoting end.

The pivoting element is characterized in that the pivoting end is coupled with the antifriction shell according to the attached claims, so that the antifriction shell defines a bearing integral with the pivoting end.

Such coupling therefore allows to obtain an important technical advantage in the use of the pivoting element since the metal-jewel wearing is replaced with the shell-jewel wear.

Preferably, the antifriction shell is coupled to the pivoting end by interference fit.

The interference fit allows the fixed joint between the pivoting end and the antifriction shell such that such elements rotate as a single element.

The aforesaid objects are also achieved by a mechanical timepiece movement comprising at least one pivoting element to transmit motion.

The mechanical timepiece movement is characterized in that the pivoting element is according to the attached claims.

Using the pivoting element provided with the antifriction shell, according to the present invention, allows to make mechanical timepiece movement of high quality and with a long life-cycle.

Finally, the aforesaid objects are achieved by a method of producing a low friction pivoting element of a mechanical timepiece movement comprising the phase of producing a pivoting element provided with at least one pivoting end.

The method of producing a low friction pivoting element is characterized in that it comprises the following phases;
- producing an intermediate crystalline structure of an antifriction shell by irradiating a silicon-ceramic based SZ2080 acrylate sol-gel with a femtosecond laser, wherein the intermediate crystalline structure has an elongated body defined along an axis of symmetry and provided with a head end and a bottom end opposite to each other and a blind central hole defined along the axis of symmetry at the head end, and wherein the blind central hole of the intermediate crystalline structure has a dimension greater than the pivoting end;
- heat-treating the intermediate crystalline structure to obtain a final structure of the elongated body by defining a ceramic phase with the silica and zirconia precursors present in the silicon-ceramic based SZ2080 acrylate sol-gel, wherein the phase of heat-treating reduces the dimension of the intermediate crystalline structure to a dimension appropriate to the final structure without distortions of the shape;
- coupling the final structure of the antifriction shell to the pivoting end. Preferably, the phase of producing an intermediate crystalline structure comprises the following step:
   - irradiating the silicon-ceramic based SZ2080 acrylate sol-gel with a femtosecond laser of a pulsed type for a duration comprised in a range between 10 femtoseconds and 1000 femtoseconds, preferably between 100 femtoseconds and 300 femtoseconds, with a wavelength in a range between 400 nm and 2000 nm, preferably around 515 nm or 800 nm, and at a frequency in a range between 1 KHz and 100 MHz, preferably around 1 Mhz; and
   the phase of heat-treating comprises the following steps:
   - heating the intermediate crystalline structure up to a working temperature in a range comprised between 1100°C and 1300°C, preferably at a working temperature around 1200°C;
   - maintain the working temperature for a working time in a range comprised between 20 minutes and 40 minutes, preferably for a working time around 30 minutes.

The method of producing a low friction pivoting element of a mechanical timepiece movement ensures a high-quality low-friction pivoting element at a reduced cost, wherein the laser irradiation phase and the heat-treating phase define a final structure which corresponds in shape with the pivoting end to be covered and with a high hardness in the Mohs scale, similar to the jewel bearing to be contacted in the mechanical timepiece movement.

### Description of the figures

These and further features and advantages of the present invention will become apparent from the disclosure of the preferred embodiments, illustrated by way of non-limiting example in the appended drawings, wherein:
- Figure 1 is a schematic front plan view of a first embodiment of the antifriction shell coupled with a pivoting end, according to the present invention;
- Figure 2 is a schematic front plan view of the pivoting element provided with the antifriction shell of Figure 1, wherein the antifriction shell is inserted in, and in contact with, a jewel bearing;
- Figure 3 is a schematic front plan view of a second embodiment of the antifriction shell coupled with a pivoting end, according to the present invention;
- Figure 4 is a schematic front plan view of the pivoting element provided with the antifriction shell of Figure 3, wherein the antifriction shell is inserted in, and in contact with, a jewel bearing and the bottom end of the antifriction shell is in contact with a further jewel bearing;
- Figure 5 is a schematic front plan view of a third embodiment of the antifriction shell provided with a rounded end of the blind central hole and a rounded bottom end, according to the present invention.

### Detailed description of the invention

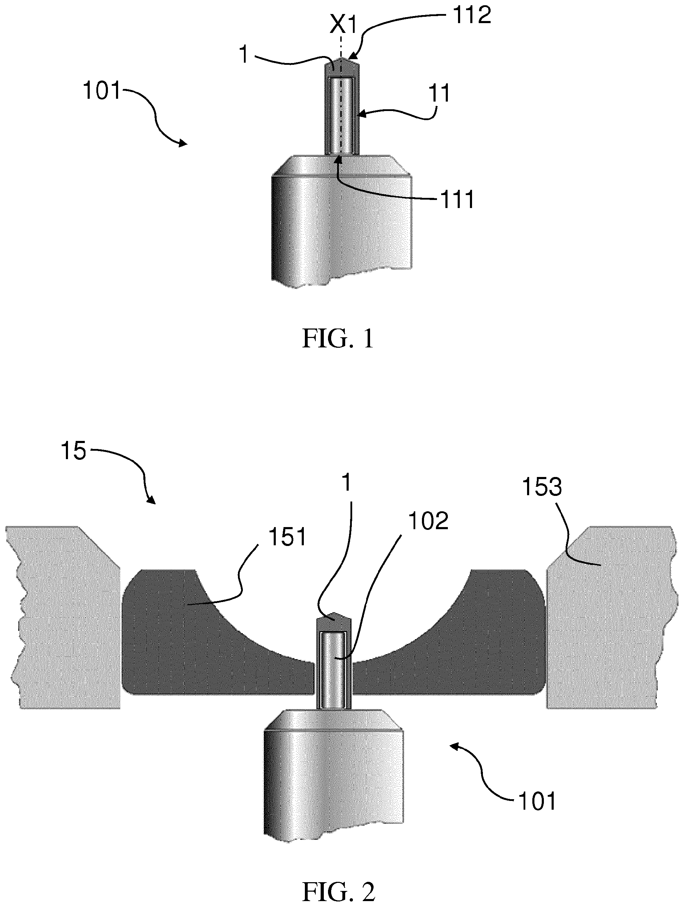

With reference to Figure 1 and Figure 2, a first embodiment of the antifriction shell 1, according to the present invention, is illustrated. In particular, the antifriction shell 1 is coupled with a corresponding first embodiment of a pivoting end 102 which, in turn, is part of a first embodiment of a mechanical timepiece movement 15, according to the present invention.

The pivoting element 101, indeed, is provided with at least one pivoting end 102, coupled with the antifriction shell 1 according to the present invention, so that the antifriction shell 1 defines a bearing integral with the same pivoting end 102. Such coupling therefore allows to obtain an important technical advantage in the use of the pivoting element 101 since the metal-jewel wearing is replaced with the shell-jewel wear. The pivoting element is typically provided with two opposite pivoting ends, aligned along an axis of rotation of the pivoting element itself. In that case, each of the pivoting ends is coupled with the antifriction shell 1 according to the present invention, so that the benefits of the shell-jewel wear are extended to both sides of the pivoting element.

Since the antifriction shell 1 according to the invention aims to cover the pivoting end 102 of the pivoting element 101, shape and dimension of the antifriction shell 1 are designed to well fits the pivoting end 102 to be coupled with. As illustrated in Figure 1, the antifriction shell 1 has a body 11 of the elongated type and defined along its axis of symmetry X1. The elongated body 11 is provided with a couple of ends opposite to each other, in particular a head end 111 and a bottom end 112. A blind central hole is provided at the head end 111, wherein said blind central hole is defined along the axis of symmetry X1 of the elongated body 11 housing the pivoting end 102 of the pivoting element 101. For the sake of clarity, the blind central hole in Figures 1 and 2 is not numbered, since the pivoting end 102 already fits the same.

In the aforementioned first embodiment herewith illustrated, the elongated body 11 has a cylindrical shape, which allows to maintain a low level of friction during rotation in the hole jewel bearing 151. Moreover, the antifriction shell 1 has a tapered bottom end 112, which will not be in contact with the hole jewel bearing 151.

According to dimension and shape of the pivoting end 102, the blind central hole of the antifriction shell 1 has a length suitable to cover such pivoting end 102 in an adequate manner and a correspondent flat end to house the same flat pivoting end 102. In particular, the antifriction shell 1 is coupled to the pivoting end 102 by interference fit, a fastening between two parts which is achieved by friction after the parts are pushed together. The tightness of fit is controlled by the amount of interference, which is a planned difference from nominal size, therefore it should be convenient to operate on the diameter of the pivoting end after the definition of the antifriction shell 1 and the related blind central hole. The interference fit may be obtained by press fit, achieved with presses that can press the parts together, the antifriction shell 1 and the pivoting end 102, with very large amounts of force aligned with the axis of symmetry X1.

The mechanical timepiece movement 15, as illustrated in Figure 2, comprises at least one pivoting element 101 provided with the antifriction shell 1 and able to transmit motion, as schematically illustrated in Figure 2. Using the pivoting element 101 provided with the antifriction shell 1, according to the present invention, allows to make a mechanical timepiece movement 15 of high quality and with a long life-cycle. In particular, in Figure 2 only a small part of the mechanical timepiece movement 15 is illustrated, to figure out the mechanical coupling of the antifriction shell 1 in a known movement, but a plurality of pivoting elements may be provided. The mechanical timepiece movement 15 comprises a jewel bearing 151 coupled to a supporting plate 153 of the mechanical timepiece movement 15. The jewel bearing 151 is of hole jewel type, therefore provided with a central passing through hole, as used for most of the known wheels in the gear train. The jewel bearing 151 is made of synthetic sapphire or ruby, press-fit into the hole of the supporting plate 153. The cup-shaped depression in the top of the jewel bearing 151 may be used as oil cup to hold the lubricating oil (not illustrated) in contact with the antifriction shell 1, that is in contact with the pivoting end 102, by capillary action. Anyway, such lubrification may not be required due to the low friction generated by the jewel-shell contact instead of the jewel-metal contact as in mechanical timepiece movement of the known type.

The antifriction shell 1 according to the present invention is made of a silicon-ceramic based SZ2080 acrylate photopolymer material, which allows to define a ceramic-like structure with high hardness in the Mohs scale. By changing ruby-to-metal fitting into ruby-to-ceramic fitting of the antifriction shell 1 a reduced friction and wear of the pivot element 101 is achieved, so to prolong the service time interval of the mechanical timepiece movement 15.

The ceramic-like antifriction shell 1 is obtained by a process able to define its exact shape and comprising a laser induced gel photopolymerization phase, followed by a heat treatment phase.

In detail, the antifriction shell 1 is obtained by a process comprising a first phase of producing an intermediate crystalline structure of the elongated body 11 by irradiating with a femtosecond laser a silicon antifriction shell 1 is obtained - ceramic based SZ2080 acrylate sol-gel, wherein the intermediate crystalline structure has the same shape and dimension greater than the final structure of the elongated body 11 itself. By using ultrafast laser nanolithography and hybrid organic-inorganic sol-gel resist SZ2080 the antifriction shell 1 with exact internal proportions of the metal pivot end, but 50-60% larger than the final structure is produced.

The phase of producing an intermediate crystalline structure preferably comprises the step of irradiating the silicon-ceramic based SZ2080 acrylate sol-gel with a femtosecond laser of a pulsed type for a duration comprised in a range between 10 femtoseconds and 1000 femtoseconds, with a wavelength in a range between 400 nm and 2000 nm and at a frequency in a range between 1 KHz and 100 Mhz. In particular, it has been found that best results are obtained with a femtosecond laser of a pulsed type for a duration between 100 femtoseconds and 300 femtoseconds, with a wavelength around 515 nm or 800 nm and at a frequency around 1 Mhz. Moreover, the pulsed laser beam may nr focused through lenses having different numerical aperture (or object-side aperture), preferably in the range between 0,8 NA and 1,4 NA.

A second phase of chemically-treating the intermediate crystalline structure to remove excess gel and organic contaminants, shall be provided.

After the production of the aforementioned intermediate crystalline structure, the antifriction shell 1 is obtained by a process comprising a third phase of heat-treating the intermediate crystalline structure to obtain the final structure of the elongated body 11 by defining a ceramic phase with the silica and zirconia precursors present in the silicon-ceramic based SZ2080 acrylate sol-gel, wherein the phase of heat-treating reduces the dimension of the intermediate crystalline structure to a dimension appropriate to the final structure without distortions of the shape. The aforementioned reduction of dimension is also called controlled shrinking.

The phase of heat-treating the intermediate crystalline structure preferably comprises the step of heating the intermediate crystalline structure up to a working temperature in a range comprised between 1100°C and 1300°C. In particular, it has been found that best results are obtained with a working temperature around 1200°C. Moreover, the phase of heat-treating the intermediate crystalline structure preferably comprises the step of maintain the working temperature for a working time in a range comprised between 20 minutes and 40 minutes. In particular, it has been found that best results are obtained with a working time around 30 minutes.

At such working temperature, and after such working time, silica and zirconia precursors present in the gel resist emerge in crystalline ceramic phases. During the phase of heat-treating a significant volume reduction of the intermediate crystalline structure is expected by up to 50% and without distortion of initial proportions. The result will be an antifriction shell 1 of cristobalite equivalent crystal in the hardness feature, with Mohs scale hardness comprised between 6 and 7. The antifriction shell 1 is, therefore, resistant to harsh environments, acids, etc., having the same chemical formula of quartz, but a distinct crystal structure.

It is estimated that diameter of pivoting end 102 varies from 0,017 to 0,12 mm, and that length of the same pivoting end 102 exposed to friction is up to 2 mm. Therefore, antifriction shell 1 mimicking these dimensions shall be of corresponding dimensions, and shell thickness shall be from 200 microns sideways to 500 microns on the bottom end 112. To accommodate the antifriction shell 1 the shape of the pivoting end might be correspondingly adjusted, such as metal reduced.

As result, the antifriction shell 1 according to the invention would provide close to sapphire-to-sapphire friction coefficient even in dry (unlubricated) mode.

A method of producing a low friction pivoting element 101 of a mechanical timepiece movement 15 is also herewith described. The aforementioned method comprises the phase of producing a pivoting element 101 provided with at least one pivoting end 102. Such a phase defines a pivoting element according to the requested design specifications. The method further comprises the production of the antifriction shell 1, obtained by the phases already described to which reference is made and which will not be further detailed. Finally, a phase of coupling the final structure of the antifriction shell 1 to the pivoting end 102 is defined. Since the friction coefficient of metal-to-ceramic is higher than ruby-to-ceramic, such coupling may be done by interference fit, as previously described.

The method of producing a low friction pivoting element of a mechanical timepiece movement ensures a high-quality low-friction pivoting element at a reduced cost, wherein the laser irradiation phase and the heat-treating phase define a final structure which corresponds in shape with the pivoting end to be covered and with a high hardness in the Mohs scale, similar to the jewel bearing to be contacted in the mechanical timepiece movement.

The low friction pivoting element may than be used and mounted in a mechanical timepiece movement as known, not further discussed here.

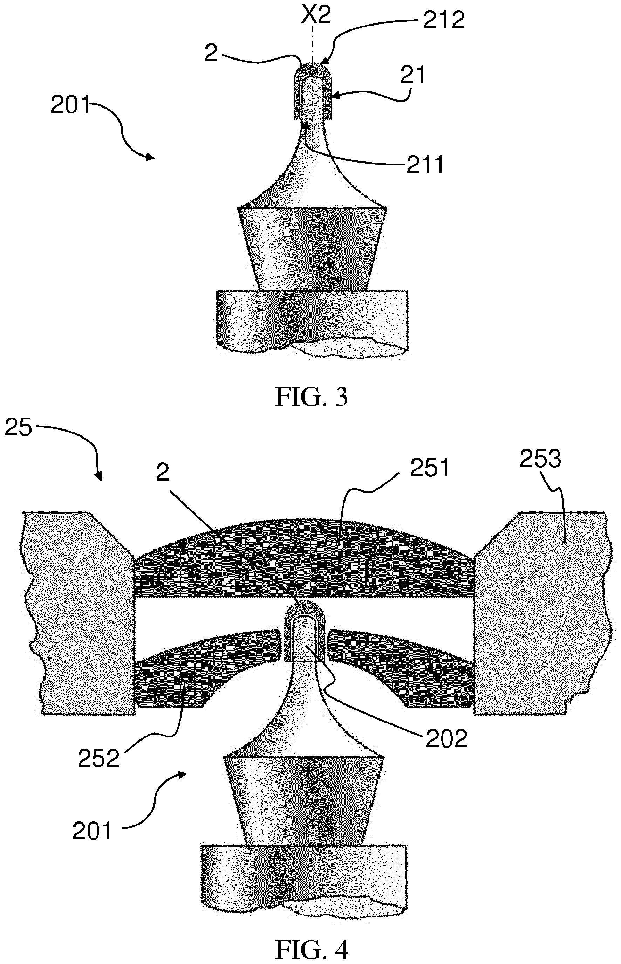

With reference to Figure 3 and Figure 4, a second embodiment of the antifriction shell 2 coupled to a pivoting end 202 of a mechanical timepiece movement 25, according to the present invention, is illustrated.

The antifriction shell 2 of the second embodiment is similar to the antifriction shell 1 of the first embodiment to which reference is made, therefore only the differentiating features will be further detailed. In the aforementioned second embodiment herewith illustrated, the elongated body 21 has a cylindrical shape, which allows to maintain a low level of friction during rotation in the hole jewel bearing 251. Moreover, the antifriction shell 2 has a chamfered bottom end 212, particularly suitable for obtaining a smooth contact to maintain a low level of friction when in contact with the capstone jewel bearing 252. The same applies, *mutatis mutandis,* to the pivoting element 202 of the second embodiment which is similar to the pivoting element 201 of the first embodiment to which reference is made, and to the mechanical timepiece movement 25 of the second embodiment which is similar to the mechanical timepiece movement 15 of the first embodiment to which reference is made.

As illustrated in Figure 3, the antifriction shell 2 has a body 21 of the elongated type and defined along its axis of symmetry X2. The elongated body 21 is provided with a couple of ends opposite to each other, in particular a head end 211 and a bottom end 212. A blind central hole is provided at the head end 211, wherein said blind central hole is defined along the axis of symmetry X2 of the elongated body 21 housing the pivoting end 202 of the pivoting element 201. For the sake of clarity, the blind central hole in Figures 3 and 4 is not numbered, since the pivoting end 202 already fits the same.

According to dimension and shape of the pivoting end 202, the blind central hole of the antifriction shell 2 has a length suitable to cover such pivoting end 202 in an adequate manner and a correspondent chamfered end to house the same chamfered pivoting end 202. This solution is particularly suitable for allowing an easy insertion of the pivoting end 202 in the antifriction shell 2. In particular, the antifriction shell 2 is coupled to the pivoting end 202 by interference fit, as already described for the first embodiment. The interference fit may be obtained by press fit, achieved with presses that can press the parts together, the antifriction shell 2 and the pivoting end 202, with very large amounts of force aligned with the axis of symmetry X2. The chamfered end of the pivoting end 202 forms a guide for the pressing movement, helping to distribute the force evenly around the circumference of the blind hole, to allow the compression to occur gradually instead of all at once, thus helping the pressing operation to be smoother, to be more easily controlled, and to require less power (less force at any one instant of time), and to assist in aligning the pivoting end 202 parallel with the blind central hole it is being pressed into. At insertion completed, the chamfered end of the pivoting end 202 will match with the chamfered end of the blind central hole.

In Figure 4 only a small part of the mechanical timepiece movement 25 is illustrated, to figure out the mechanical coupling of the antifriction shell 2 in a known movement in wheel where friction is critical. The mechanical timepiece movement 25 comprises a jewel bearing 251 coupled to a supporting plate 253 of the mechanical timepiece movement 25, as already illustrated in the first embodiment of Figure 2. Therefore, the jewel bearing 251 press-fit into the hole of the supporting plate 253 and, moreover, a further jewel bearing 252 of the capstone type is added on the end to prevent the shoulder of the elongated body 21 from bearing against the face of the jewel bearing 251.

The antifriction shell 2 according to the present invention is made of a silicon-ceramic based SZ2080 acrylate photopolymer material, which allows to define a ceramic-like structure with high hardness in the Mohs scale. By changing ruby-to-metal fitting into ruby-to-ceramic fitting of the antifriction shell 2 a reduced friction and wear of the pivot element 201 is achieved, so to prolong the service time interval of the mechanical timepiece movement 25.

The ceramic-like antifriction shell 2 is obtained by a process able to define its exact shape and comprising a laser induced gel photopolymerization phase, followed by a heat treatment phase, obtained by the phases already described in the first embodiment to which reference is made and which will not be further detailed.

The method of producing a low friction pivoting element, as described in the first embodiment, applies also for the pivoting element 201 of a mechanical timepiece movement 25, therefore will not be further detailed.

The method of producing a low friction pivoting element of a mechanical timepiece movement ensures a high-quality low-friction pivoting element at a reduced cost, wherein the laser irradiation phase and the heat-treating phase define a final structure which corresponds in shape with the pivoting end to be covered and with a high hardness in the Mohs scale, similar to the jewel bearing to be contacted in the mechanical timepiece movement.

The low friction pivoting element may than be used and mounted in a mechanical timepiece movement as known, not further discussed here.

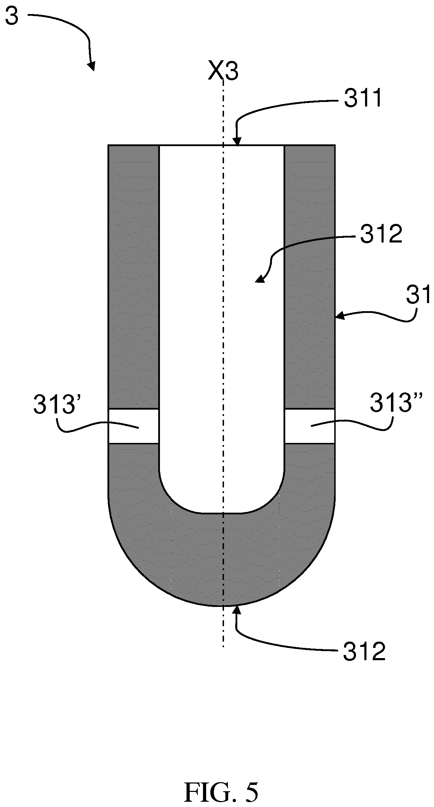

With reference to Figure 5, a third embodiment of the antifriction shell 3, according to the present invention, is illustrated. As in the aforementioned embodiments, the antifriction shell 3 according to the present invention is able to be coupled to a pivoting end of a pivoting element (not illustrated) so that the antifriction shell 3 defines a bearing integral with the same pivoting end.

The antifriction shell 3 of the third embodiment is similar to the antifriction shells 1 and 2, respectively of the first and second embodiment, to which reference is made, therefore only the differentiating features will be further detailed.

As illustrated in Figure 5, the antifriction shell 3 has a body 31 of the elongated type and defined along its axis of symmetry X3. The elongated body 31 is provided with a couple of ends opposite to each other, in particular a head end 311 and a bottom end 312. A blind central hole is provided at the head end 311, wherein said blind central hole is defined along the axis of symmetry X3 of the elongated body 31 and able to house a pivoting end of a pivoting element (not illustrated).

In the aforementioned third embodiment herewith illustrated, the elongated body 31 has a cylindrical shape, which allows to maintain a low level of friction during rotation in a hole jewel bearing. Moreover, the antifriction shell 3 has a chamfered bottom end 312, particularly suitable for obtaining a smooth contact to maintain a low level of friction when in contact with a capstone jewel bearing.

According to dimension and shape of a pivoting end to be coupled with, the blind central hole of the antifriction shell 3 has a length suitable to cover such pivoting end in an adequate manner and a correspondent chamfered end to house a similar chamfered pivoting end. As already explained in the second embodiment, this solution is particularly suitable for allowing an easy insertion of a pivoting end in the antifriction shell 3.

Moreover, the antifriction shell 3 is also provided with a couple of through holes 313', 313" on the elongated body 31. The through holes 313', 313" are defined transverse to, and in communication with, the blind central hole 312. In particular, the through holes 313', 313" are perpendicular to the blind central hole 312, but different inclinations may be provided, the diameters of which are in the range of microns. The through holes 313', 313" thus allow the expulsion of air during the fitting of a pivoting end in the antifriction shell 3, minimizing the effort during assembly. The through holes as herewith defined may be employed in all the embodiments disclosed in the present invention.

Again, the third embodiment of the ceramic-like antifriction shell 3 is obtained by a process able to define its exact shape and comprising a laser induced gel photopolymerization phase, followed by a heat treatment phase, obtained by the phases already described in the first embodiment to which reference is made and which will not be further detailed.

The method of producing a low friction pivoting element, as described in the first embodiment, may also make use of the antifriction shell 3 according to the third embodiment.

In a further embodiment, not illustrated, the antifriction shell may comprise an outer surface provided with a specific texturing which enhance the antifriction effect.

Even if not illustrated, the elongated body of the antifriction shell may assume different shapes with respect to the illustrated embodiments, without affecting the inventive concept of the present invention. The shape of the elongated body could be, therefore, designed in connection with the jewel bearing to which will be coupled.

In an embodiment, the elongated body may have a spherical shape or a rounded shape.

In a further embodiment, the elongated body may have a conical shape, wherein the major base corresponds to its head end and the vertex corresponds to its bottom end.

Finally, in a further embodiment, the elongated body may have a truncated cone shape, wherein the major base corresponds to its head end and the minor base corresponds to its bottom end.

At the same time, the central blind hole of the antifriction shell may also assume different shapes of the end with respect to the illustrated embodiments, without affecting the inventive concept of the present invention. The end of the central blind hole could be, therefore, designed in connection with the corresponding end of the pivoting element to which will be coupled.

In an embodiment, the blind central hole may have a tapered end.

In a further embodiment, the blind central hole may have a rounded end.

The shape of the elongated body, as well as the shape of the central blind hole, may be combined according to the needs without affecting the present invention.

Moreover, a different kind of fastening may be used to couple the antifriction shell and the pivoting end of the pivoting element, for example making use of adhesive, or similar material, for more permanent fastening.

Finally, the use of the antifriction shell may render unnecessary any known jewel bearing and, in particular, any known sapphire jewel bearing, therefore the mechanical timepiece movement may be simplified, as well as the assembling process by avoiding the fitting of the jewel bearings. The antifriction shell itself could represent inverted structure similar to the known metal-jewel wearing setting.

## Claims

1. An antifriction shell (1; 2; 3) for pivoting elements (101; 201) of a mechanical timepiece movement (15; 25), **characterized in that** said antifriction shell (1; 2; 3) is made of a silicon-ceramic based on hybrid organic-inorganic SZ2080 zirconium-silicon acrylate photopolymer material,
wherein said antifriction shell (1; 2; 3) has an elongated body (11; 21; 31) defined along an axis of symmetry (X1; X2; X3) and provided with a head end (111; 211; 311) and a bottom end (112; 212; 312) opposite to each other, and wherein said elongated body (11; 21; 31) comprises a blind central hole (312) defined along said axis of symmetry (X1; X2; X3) at said head end (111; 211; 311),
wherein said antifriction shell (1; 2; 3) is obtained by a process comprising the following phases:
- producing an intermediate crystalline structure of said elongated body (11; 21; 31) by irradiating with a femtosecond laser said hybrid organic-inorganic SZ2080 zirconium-silicon acrylate sol-gel, wherein said intermediate crystalline structure has the same shape and dimension greater than the final structure of said elongated body (11; 21; 31);
- heat-treating said intermediate crystalline structure to obtain said final structure of said elongated body (11; 21; 31) thus defining a ceramic phase by the silica and zirconia precursors present in said hybrid organic-inorganic SZ2080 zirconium-silicon acrylate sol-gel, wherein said phase of heat-treating reduces the dimension of said intermediate crystalline structure to a dimension appropriate to said final structure without distortions of said shape..

2. The antifriction shell (1; 2; 3) according to claim 1, wherein said bottom end (112; 212; 312) is tapered or rounded or chamfered.

3. The antifriction shell (1; 2; 3) according to claim 1 or 2, wherein said blind central hole (312) has a tapered end or a rounded end or chamfered end or a flat end.

4. The antifriction shell (3) according to one or more claims from 1 to 3, wherein said elongated body (31) comprises one or more through hole (313', 313") transverse to, and in communication with, said blind central hole (312).

5. The antifriction shell according to one or more claims from 1 to 4, wherein said elongated body has a spherical shape.

6. The antifriction shell (1; 2; 3) according to one or more claims from 1 to 4, wherein said elongated body (11; 21; 31) has a cylindrical shape.

7. The antifriction shell according to one or more claims from 1 to 4, wherein said elongated body has a conical shape,
wherein the major base corresponds to said head end and the vertex corresponds to said bottom end.

8. The antifriction shell according to one or more claims from 1 to 4, wherein said elongated body has a truncated cone shape,
wherein the major base corresponds to said head end and the minor base corresponds to said bottom end.

9. The antifriction shell (1; 2; 3) according to one or more claims from 1 to 8, wherein said phase of producing an intermediate crystalline structure comprises the following step:
- irradiating said hybrid organic-inorganic SZ2080 zirconium-silicon acrylate sol-gel with a femtosecond laser of a pulsed type for a duration comprised in a range between 10 femtoseconds and 1000 femtoseconds, preferably between 100 femtoseconds and 300 femtoseconds, with a wavelength in a range between 400 nm and 2000 nm, preferably around 515 nm or 800 nm, and at a frequency in a range between 1 KHz to 100 Mhz, preferably around 1 Mhz; and
said phase of heat-treating comprises the following steps:
- heating said intermediate crystalline structure up to a working temperature in a range comprised between 1100°C and 1300°C, preferably at a working temperature around 1200°C;
- maintain said working temperature for a working time in a range comprised between 20 minutes and 40 minutes, preferably for a working time around 30 minutes.

10. A pivoting element (101; 201) of a mechanical timepiece movement (15; 25) provided with at least one pivoting end (102; 202), said pivoting element (101; 201) is **characterized in that** said pivoting end (102; 202) is coupled with said antifriction shell (1; 2) according to one or more claims from 1 to 9, so that said antifriction shell (1; 2) defines a bearing integral with said pivoting end (102; 202).

11. A pivoting element (101; 201) of a mechanical timepiece movement (15; 25) according to claim 10, wherein said antifriction shell (1; 2) is coupled to said pivoting end (102; 202) by interference fit.

12. A mechanical timepiece movement (15; 25) comprising at least one pivoting element (101; 201) to transmit motion, said mechanical timepiece movement (15; 25) is **characterized in that** said pivoting element (101; 201) is according to one or more claims from 10 to 11.

13. A method of producing a low friction pivoting element (101; 201) of a mechanical timepiece movement (15; 25) comprising the phase of producing a pivoting element (101; 201) provided with at least one pivoting end (102; 202), said method of producing a low friction pivoting element (101; 201) is **characterized in that** it comprises the following phases;
- producing an intermediate crystalline structure of an antifriction shell (1; 2) by irradiating a hybrid organic-inorganic SZ2080 zirconium-silicon acrylate sol-gel with a femtosecond laser, wherein said intermediate crystalline structure has an elongated body (11; 21) defined along an axis of symmetry (X1; X2) and provided with a head end (111; 211) and a bottom end (112; 212) opposite to each other and a blind central hole defined along said axis of symmetry (X1; X2) at said head end (111; 211), and wherein said blind central hole of said intermediate crystalline structure has a dimension greater than said pivoting end (102; 202);
- heat-treating said intermediate crystalline structure to obtain a final structure of said elongated body (11; 21) thus defining a ceramic phase by the silica and zirconia precursors present in said hybrid organic-inorganic SZ2080 zirconium-silicon acrylate sol-gel, wherein said phase of heat-treating reduces the dimension of said intermediate crystalline structure to a dimension appropriate to said final structure without distortions of said shape;
- coupling said final structure of said antifriction shell (1; 2) to said pivoting end (102; 202).

14. The method of producing a low friction pivoting element (101; 201) according to claim 13, wherein said phase of producing an intermediate crystalline structure comprises the following step:
- irradiating said hybrid organic-inorganic SZ2080 zirconium-silicon acrylate sol-gel with a femtosecond laser of a pulsed type for a duration comprised in a range between 10 femtoseconds and 1000 femtoseconds, preferably between 100 femtoseconds and 300 femtoseconds, with a wavelength in a range between 400 nm and 2000 nm, preferably around 515 nm or 800 nm, and at a frequency in a range between 1 KHz and 100 Mhz, preferably around 1 Mhz; and
said phase of heat-treating comprises the following steps:
- heating said intermediate crystalline structure up to a working temperature in a range comprised between 1100°C and 1300°C, preferably at a working temperature around 1200°C;
- maintain said working temperature for a working time in a range comprised between 20 minutes and 40 minutes, preferably for a working time around 30 minutes.

## Patentansprüche

1. Reibungsverhindernde Hülle (1; 2; 3) für schwenkbare Elemente (101; 201) eines mechanischen Uhrwerks (15; 25), **dadurch gekennzeichnet, dass** die reibungsverhindernde Hülle (1; 2; 3) aus einer Siliziumkeramik auf der Basis eines hybriden organisch-anorganischen SZ2080-Zirkonium-Silizium-Acrylat-Photopolymer-Materials hergestellt ist, wobei die reibungsverhindernde Hülle (1; 2; 3) einen länglichen Körper (11; 21; 31) aufweist, der entlang einer Symmetrieachse (X1; X2; X3) definiert ist und mit einem Kopfende (111; 211; 311) und einem Bodenende (112; 212; 312) versehen ist, die einander gegenüberliegen, und wobei der längliche Körper (11; 21; 31) ein zentrales Sackloch (312) aufweist, das entlang der Symmetrieachse (X1; X2; X3) an dem Kopfende (111; 211; 311) definiert ist, wobei die reibungsverhindernde Hülle (1; 2; 3) durch ein Verfahren erhalten wird, das die folgenden Phasen umfasst:
Erzeugen einer kristallinen Zwischenstruktur des länglichen Körpers (11; 21; 31) durch Bestrahlen des hybriden organisch-anorganischen SZ2080 Zirkonium-Silizium-Acrylat-Sol-Gel mit einem Femtosekundenlaser, wobei die kristalline Zwischenstruktur die gleiche Form und größere Abmessungen als die endgültige Struktur des länglichen Körpers (11; 21; 31) aufweist;
Wärmebehandlung der kristallinen Zwischenstruktur, um die endgültige Struktur des länglichen Körpers (11; 21; 31) zu erhalten, wodurch eine keramische Phase durch die Siliziumdioxid- und Zirkoniumdioxid-Vorläufer definiert wird, die in dem hybriden organisch-anorganischen SZ2080-Zirkonium-Silizium-Acrylat-Sol-Gel vorhanden sind, wobei die Phase der Wärmebehandlung die Abmessung der kristallinen Zwischenstruktur auf eine Abmessung reduziert, die für die endgültige Struktur ohne Verzerrungen der Form geeignet ist.

2. Reibungsverhindernde Hülle (1; 2; 3) nach Anspruch 1, wobei das untere Ende (112; 212; 312) verjüngt oder abgerundet oder abgeschrägt ist.

3. Reibungsverhindernde Hülle (1; 2; 3) nach Anspruch 1 oder 2, wobei das zentrale Sackloch (312) ein verjüngtes Ende, ein abgerundetes Ende, ein abgeschrägtes Ende oder ein flaches Ende aufweist.

4. Reibungsverhindernde Hülle (3) nach einem oder mehreren der Ansprüche 1 bis 3, wobei der langgestreckte Körper (31) ein oder mehrere Durchgangslöcher (313', 313") aufweist, die quer zu dem zentralen Sackloch (312) liegen und mit diesem in Verbindung stehen.

5. Reibungsverhindernde Hülle nach einem oder mehreren der Ansprüche 1 bis 4, wobei der langgestreckte Körper eine kugelförmige Gestalt hat.

6. Reibungsverhindernde Hülle (1; 2; 3) nach einem oder mehreren der Ansprüche 1 bis 4, wobei der langgestreckte Körper (11; 21; 31) eine zylindrische Form aufweist.

7. Reibungsverhindernde Hülle nach einem oder mehreren der Ansprüche 1 bis 4, bei der der langgestreckte Körper eine konische Form aufweist, wobei die Hauptbasis dem Kopfende und der Scheitelpunkt dem Bodenende entspricht.

8. Reibungsverhindernde Hülle nach einem oder mehreren der Ansprüche 1 bis 4, wobei der langgestreckte Körper eine Kegelstumpfform aufweist, bei der die Hauptbasis dem Kopfende und die Nebenbasis dem Bodenende entspricht.

9. Reibungsverhindernde Hülle (1; 2; 3) nach einem oder mehreren der Ansprüche 1 bis 8, wobei die Phase der Herstellung einer intermediären kristallinen Struktur den folgenden Schritt umfasst:
- Bestrahlung des hybriden organisch-anorganischen SZ2080-Zirkonium-Silizium-Acrylat-Sol-Gels mit einem gepulsten Femtosekundenlaser für eine Dauer im Bereich zwischen 10 Femtosekunden und 1000 Femtosekunden, vorzugsweise zwischen 100 Femtosekunden und 300 Femtosekunden, mit einer Wellenlänge in einem Bereich zwischen 400 nm und 2000 nm, vorzugsweise um 515 nm oder 800 nm, und mit einer Frequenz in einem Bereich zwischen 1 KHz und 100 Mhz, vorzugsweise um 1 Mhz; und die Phase der Wärmebehandlung die folgenden Schritte umfasst:
- Erhitzen der kristallinen Zwischenstruktur auf eine Arbeitstemperatur in einem Bereich zwischen 1100°C und 1300°C, vorzugsweise auf eine Arbeitstemperatur um 1200°C;
- Aufrechterhalten der Arbeitstemperatur für eine Arbeitsdauer in einem Bereich zwischen 20 Minuten und 40 Minuten, vorzugsweise für eine Arbeitsdauer von etwa 30 Minuten.

10. Schwenkbares Element (101; 201) eines mechanischen Uhrwerks (15; 25), das mit mindestens einem schwenkbaren Ende (102; 202) versehen ist, wobei das Element (101; 201) **dadurch gekennzeichnet ist, dass** das schwenkbare Ende (102; 202) mit der reibungsverhindernden Hülle (1; 2) nach einem oder mehreren der Ansprüche 1 bis 9 gekoppelt ist, so dass die reibungsverhindernde Hülle (1; 2) ein mit dem schwenkbaren Ende (102; 202) einstückiges Lager definiert.

11. Schwenkbares Element (101; 201) eines mechanischen Uhrwerks (15; 25) nach Anspruch 10, wobei die reibungsverhindernde Hülle (1; 2) mit dem Schwenkende (102; 202) durch Presspassung gekoppelt ist.

12. Mechanisches Uhrwerk (15; 25) mit mindestens einem schwenkbaren Element (101; 201) zur Bewegungsübertragung, wobei das mechanische Uhrwerk (15; 25) **dadurch gekennzeichnet ist, dass** das schwenkbare Element (101; 201) nach einem oder mehreren der Ansprüche 10 bis 11 ausgeführt ist.

13. Verfahren zur Herstellung eines reibungsarmen schwenkbaren Element (101; 201) eines mechanischen Uhrwerks (15; 25), umfassend die Phase der Herstellung eines schwenkbaren Elementes (101; 201), das mit mindestens einem Schwenkende (102; 202) versehen ist, wobei das Verfahren zur Herstellung eines reibungsarmen schwenkbaren Elementes (101; 201) **dadurch gekennzeichnet ist, dass** es die folgenden Phasen umfasst;
- Herstellung einer kristallinen Zwischenstruktur einer reibungsverhindernden Hülle (1; 2) durch Bestrahlung eines hybriden organisch-anorganischen SZ2080-Zirkonium-Silizium-Acrylat-Sol-Gels mit einem Femtosekundenlaser, wobei die kristalline Zwischenstruktur einen länglichen Körper (11; 21) aufweist, der entlang einer Symmetrieachse (XI; X2) definiert ist und mit einem Kopfende (111; 211) und einem Bodenende (112; 212), die einander gegenüberliegen, und einem zentralen Sackloch, das entlang der Symmetrieachse (X1; X2) an dem Kopfende (111; 211) definiert ist, versehen ist, und wobei das zentrale Sackloch der kristallinen Zwischenstruktur eine größere Abmessung als das Schwenkende (102; 202) aufweist;
Wärmebehandlung der kristallinen Zwischenstruktur, um eine endgültige Struktur des langgestreckten Körpers (11; 21) zu erhalten, wodurch eine keramische Phase durch die Siliziumdioxid- und Zirkoniumdioxid-Vorläufer definiert wird, die in dem hybriden organisch-anorganischen SZ2080 Zirkonium-Silizium-Acrylat-Sol-Gel vorhanden sind, wobei die Phase der Wärmebehandlung die Abmessung der kristallinen Zwischenstruktur auf eine Abmessung reduziert, die für die endgültige Struktur ohne Verzerrungen der Form geeignet ist;
- Verbinden der endgültigen Struktur der reibungsverhindernden Hülle (1; 2) mit dem schwenkbaren Ende (102; 202).

14. Verfahren zur Herstellung eines reibungsarmen schwenkbaren Elements (101;201) nach Anspruch 13, wobei die Phase der Herstellung einer kristallinen Zwischenstruktur den folgenden Schritt umfasst:
- Bestrahlung des hybriden organisch-anorganischen SZ2080-Zirkonium-Silizium-Acrylat-Sol-Gels mit einem gepulsten Femtosekundenlaser für eine Dauer im Bereich zwischen 10 Femtosekunden und 1000 Femtosekunden, vorzugsweise zwischen 100 Femtosekunden und 300 Femtosekunden, mit einer Wellenlänge in einem Bereich zwischen 400 nm und 2000 nm, vorzugsweise um 515 nm oder 800 nm, und mit einer Frequenz in einem Bereich zwischen 1 kHz und 100 Mhz, vorzugsweise um 1 Mhz; und die Phase der Wärmebehandlung umfasst die folgenden Schritte:
- Erhitzen der kristallinen Zwischenstruktur bis zu einer Arbeitstemperatur in einem Bereich zwischen 1100°C und 1300°C, vorzugsweise bei einer Arbeitstemperatur um 1200°C;
- Aufrechterhalten der Arbeitstemperatur für eine Arbeitsdauer in einem Bereich zwischen 20 Minuten und 40 Minuten, vorzugsweise für eine Arbeitsdauer von etwa 30 Minuten.

## Revendications

1. - Coque antifriction (1 ; 2 ; 3) pour des éléments pivotants (101 ; 201) d'un mouvement d'horlogerie mécanique (15 ; 25), **caractérisée par le fait que** ladite coque antifriction (1 ; 2 ; 3) est faite d'une céramique de silicium à base d'un photopolymère d'acrylate de zirconium-silicium SZ2080 organique-inorganique hybride.
ladite coque antifriction (1 ; 2 ; 3) ayant un corps allongé (11 ; 21 ; 31) défini le long d'un axe de symétrie (X1 ; X2 ; X3) et comportant une extrémité de tête (111 ; 211 ; 311) et une extrémité de fond (112 ; 212 ; 312) opposées l'une à l'autre, et
ledit corps allongé (11 ; 21 ; 31) comprenant un trou central borgne (312) défini le long dudit axe de symétrie (X1 ; X2 ; X3) à ladite extrémité de tête (111 ; 211 ; 311),
ladite coque antifriction (1 ; 2 ; 3) étant obtenue par un procédé comprenant les phases suivantes :
- produire une structure cristalline intermédiaire dudit corps allongé (11 ; 21 ; 31) en irradiant, avec un laser femtoseconde, ledit sol-gel d'acrylate de silicium-zirconium SZ2080 organique-inorganique hybride, ladite structure cristalline intermédiaire ayant la même forme et une dimension supérieure à la structure finale dudit corps allongé (11 ; 21 ; 31) ;
- traiter thermiquement ladite structure cristalline intermédiaire pour obtenir ladite structure finale dudit corps allongé (11 ; 21 ; 31) définissant ainsi une phase céramique par les précurseurs de silice et de zircone présents dans ledit sol-gel d'acrylate de silicium-zirconium SZ2080 organique-inorganique hybride, ladite phase de traitement thermique réduisant la dimension de ladite structure cristalline intermédiaire à une dimension appropriée à ladite structure finale sans distorsions de ladite forme.

2. - Coque antifriction (1 ; 2 ; 3) selon la revendication 1, dans laquelle ladite extrémité de fond (112 ; 212 ; 312) est effilée ou arrondie ou chanfreinée.

3. - Coque antifriction (1 ; 2 ; 3) selon l'une des revendications 1 ou 2, dans laquelle ledit trou central borgne (312) a une extrémité effilée ou une extrémité arrondie ou une extrémité chanfreinée ou une extrémité plate.

4. - Coque antifriction (3) selon une ou plusieurs des revendications 1 à 3, dans laquelle ledit corps allongé (31) comprend un ou plusieurs trous traversants (313', 313") transversaux audit trou central borgne (312) et en communication avec celui-ci.

5. - Coque antifriction selon une ou plusieurs des revendications 1 à 4, dans laquelle ledit corps allongé a une forme sphérique.

6. - Coque antifriction (1 ; 2 ; 3) selon une ou plusieurs des revendications 1 à 4, dans laquelle ledit corps allongé (11 ; 21 ; 31) a une forme cylindrique.

7. - Coque antifriction selon une ou plusieurs des revendications 1 à 4, dans laquelle ledit corps allongé a une forme conique,
dans laquelle la grande base correspond à ladite extrémité de tête et le sommet correspond à ladite extrémité de fond.

8. - Coque antifriction selon une ou plusieurs des revendications 1 à 4, dans laquelle ledit corps allongé a une forme tronconique,
dans laquelle la grande base correspond à ladite extrémité de tête et la petite base correspond à ladite extrémité de fond.

9. - Coque antifriction (1 ; 2 ; 3) selon une ou plusieurs des revendications 1 à 8, dans laquelle ladite phase de production d'une structure cristalline intermédiaire comprend l'étape suivante :
- irradier ledit sol-gel d'acrylate de silicium-zirconium SZ2080 organique-inorganique hybride avec un laser femtoseconde d'un type pulsé pendant une durée comprise dans une plage entre 10 femtosecondes et 1000 femtosecondes, de préférence entre 100 femtosecondes et 300 femtosecondes, avec une longueur d'onde dans une plage entre 400 nm et 2000 nm, de préférence aux environs de 515 nm ou de 800 nm, et à une fréquence dans une plage entre 1 KHz et 100 MHz, de préférence aux environs de 1 MHz ; et
ladite phase de traitement thermique comprend les étapes suivantes :
- chauffer ladite structure cristalline intermédiaire jusqu'à une température de travail dans une plage comprise entre 1100°C et 1300°C, de préférence à une température de travail aux environs de 1200°C ;
- maintenir ladite température de travail pendant un temps de travail dans une plage comprise entre 20 minutes et 40 minutes, de préférence pendant un temps de travail aux environs de 30 minutes.

10. - Élément pivotant (101 ; 201) d'un mouvement d'horlogerie mécanique (15 ; 25) comportant au moins une extrémité pivotante (102 ; 202), ledit élément pivotant (101 ; 201) étant **caractérisé par le fait que** ladite extrémité pivotante (102 ; 202) est couplée à ladite coque antifriction (1 ; 2) selon une ou plusieurs des revendications 1 à 9, de telle sorte que ladite coque antifriction (1 ; 2) définit un support d'un seul tenant avec ladite extrémité pivotante (102 ; 202).

11. - Élément pivotant (101 ; 201) d'un mouvement d'horlogerie mécanique (15 ; 25) selon la revendication 10, dans lequel ladite coque antifriction (1 ; 2) est couplée à ladite extrémité pivotante (102 ; 202) par ajustement serré.

12. - Mouvement d'horlogerie mécanique (15 ; 25) comprenant au moins un élément pivotant (101 ; 201) pour transmettre un mouvement, ledit mouvement d'horlogerie mécanique (15 ; 25) étant **caractérisé par le fait que** ledit élément pivotant et(101 ; 201) est selon une ou plusieurs des revendications 10 à 11.

13. - Procédé de fabrication d'un élément pivotant à faible friction (101 ; 201) d'un mouvement d'horlogerie mécanique (15 ; 25) comprenant la phase de fabrication d'un élément pivotant (101 ; 201) comportant au moins une extrémité pivotante (102 ; 202), ledit procédé de fabrication d'un élément pivotant à faible friction (101 ; 201) étant **caractérisé par le fait qu'**il comprend les phases suivantes :
- produire une structure cristalline intermédiaire d'une coque antifriction (1 ; 2) en irradiant un sol-gel d'acrylate de zirconium-silicium SZ2080 organique-inorganique hybride avec un laser femtoseconde, ladite structure cristalline intermédiaire ayant un corps allongé (11 ; 21) défini le long d'un axe de symétrie (X1 ; X2) et comportant une extrémité de tête (111 ; 211) et une extrémité de fond (112 ; 212) opposées l'une à l'autre et un trou central borgne défini le long dudit axe de symétrie (X1 ; X2) à ladite extrémité de tête (111 ; 211), et ledit trou central borgne de ladite structure cristalline intermédiaire ayant une dimension supérieure à ladite extrémité pivotante (102 ; 202) ;
- traiter thermiquement ladite structure cristalline intermédiaire pour obtenir une structure finale dudit corps allongé (11 ; 21) définissant ainsi une phase céramique par les précurseurs de silice et de zircone présents dans ledit sol-gel d'acrylate de zirconium-silicium SZ2080 organique-inorganique hybride, ladite phase de traitement thermique réduisant la dimension de ladite structure cristalline intermédiaire à une dimension appropriée à ladite structure finale sans distorsions de ladite forme ;
- coupler ladite structure finale de ladite coque antifriction (1 ; 2) à ladite extrémité pivotante (102 ; 202) .

14. - Procédé de fabrication d'un élément pivotant à faible friction (101 ; 201) selon la revendication 13, dans lequel ladite phase de production d'une structure cristalline intermédiaire comprend l'étape suivante :
- irradier ledit sol-gel d'acrylate de zirconium-silicium SZ2080 organique-inorganique hybride avec un laser femtoseconde d'un type pulsé pendant une durée comprise dans la plage entre 10 femtosecondes et 1000 femtosecondes, de préférence entre 100 femtosecondes et 300 femtosecondes, avec une longueur d'onde dans une plage entre 400 nm et 2000 nm, de préférence aux environs de 515 nm ou de 800 nm, et à une fréquence dans une plage entre 1 KHz et 100 MHz, de préférence aux environs de 1 MHz ; et
ladite phase de traitement thermique comprend les étapes suivantes :
- chauffer ladite structure cristalline intermédiaire jusqu'à une température de travail dans une plage entre 1100°C et 1300°C, de préférence à une température de travail aux environs de 1200°C ;
- maintenir ladite température de travail pendant un temps de travail dans une plage entre 20 minutes et 40 minutes, de préférence pendant un temps de travail aux environs de 30 minutes.
